# FASCICULE DE BREVET EUROPEEN

(11) **EP 4 148 299 B1**
(45) Date de publication et mention de la délivrance du brevet: **15.05.2024**
(21) Numéro de dépôt: 22179368.0
(22) Date de dépôt: 16.06.2022
(51) Int. Cl.: F16H 21/44, B64C 11/32, B64C 27/57, B64C 27/605

(54) **COMBINATEUR MÉCANIQUE A GAIN VARIABLE ET AERONEF MUNI D'UN TEL COMBINATEUR**
VORRICHTUNG MIT VARIABLER VERSTÄRKUNGUND MIT EINER SOLCHEN VORRICHTUNG AUSGESTATTETES LUFTFAHRZEUG
MECHANICAL DEVICE WITH VARIABLE GAIN AND AN AIRCRAFT PROVIDED WITH SUCH A DEVICE

(30) Priorité: 09.09.2021 FR 2109427
(43) Date de publication de la demande: 15.03.2023
(73) Titulaire: Airbus Helicopters, 13725 Marignane Cedex (FR)
(72) Inventeur: ABDELLI, Kamel, 13011 MARSEILLE (FR)
(74) Mandataire: GPI Brevets

(56) Documents cités:
- FR-A1- 3 027 871
- US-A1- 2010 308 157

## Description

La présente invention concerne un combinateur à gain variable pour superposer au moins un premier ordre et un deuxième ordre de commande.

L'invention est rattachée au domaine des aéronefs, et des giravions notamment. L'invention relève plus particulièrement des systèmes de commande de vol qui sont actionnés pour piloter un aéronef à voilure tournante.

Un giravion est communément équipé de systèmes combinant des ordres pour le diriger.

L'hélicoptère est un premier type de giravion. Un hélicoptère comporte classiquement un rotor principal. Le rotor principal comporte des pales à pas variable. Le pas des pales du rotor principal peut comprendre une composante rotor de pas collectif et une composante rotor de pas cyclique. L'hélicoptère peut alors comprendre au moins un combinateur rotor pour superposer des ordres de modification des composantes rotor de pas cyclique et de pas collectif des pales du rotor principal, ces ordres étant donnés par un pilote humain ou automatique. Par ailleurs, un hélicoptère classique peut comprendre un dispositif anticouple commandé par un palonnier pour contrôler son mouvement en lacet.

Le document FR 3027871 présente un dispositif mécanique destiné à combiner au moins un premier ordre de commande et un deuxième ordre de commande. Le dispositif mécanique est muni d'un moyen de renvoi et d'un organe mécanique allongé s'étendant d'une première extrémité articulée au moyen de renvoi vers une deuxième extrémité. L'organe mécanique allongé pivote autour d'un axe de rotation vertical immobile. Le dispositif mécanique comporte une pièce mécanique uniquement mobile en rotation autour de cet axe de rotation, cette pièce mécanique ayant une articulation d'entrée reliée à une liaison mécanique. Une bielle est articulée d'une part au moyen de renvoi et d'autre part à la pièce mécanique. Une première liaison mécanique d'entrée peut piloter la rotation de l'organe mécanique allongé et une deuxième liaison mécanique d'entrée peut piloter la rotation de la pièce mécanique. Le moyen de renvoi est en outre articulé à deux liaisons de sortie.

Un autre type de giravion est un hélicoptère hybride muni d'au moins un rotor, d'au moins une hélice et d'au moins une aile. Par exemple, un hélicoptère hybride comporte deux hélices disposées latéralement de part et d'autre d'une cellule portant un rotor. L'hélicoptère hybride peut comprendre un système de commande du pas des pales du rotor, éventuellement muni d'un combinateur rotor à l'instar d'un hélicoptère.

En présence de deux hélices, le pas des pales des hélices peut avoir une composante d'hélice de pas collectif et une composante d'hélice de pas différentiel. La composante d'hélice de pas différentiel peut être pilotée à l'aide d'un palonnier par exemple. Eventuellement, le pas des pales d'une hélice est égal à la somme de la composante d'hélice de pas collectif et de la composante d'hélice de pas différentiel, le pas des pales de l'autre hélice est égal à la différence de la composante d'hélice de pas collectif et de la composante d'hélice de pas différentiel. Pour chaque hélice, un combinateur hélice peut combiner/superposer un ordre de variation de la composante d'hélice de pas collectif et un ordre de variation de la composante d'hélice de pas cyclique.

Le document FR 2946318 décrit un dispositif mécanique apte à combiner un premier ordre et un deuxième ordre de commande du pas de pales d'au moins un ensemble tournant. Ce dispositif comporte une structure porteuse apte à être fixée à un support par au moins un axe de fixation principal autour duquel la structure porteuse est à même d'effectuer un mouvement rotatif. De plus, le dispositif comprend au moins un levier de liaison par ensemble tournant et un axe de fixation secondaire par levier de liaison. L'axe de fixation secondaire est d'une part solidarisé à la structure porteuse et, d'autre part, fixé par un moyen rotatif au levier de liaison.

Quel que soit le type du giravion, les règlements de certification des organismes de régulation aérienne peuvent exiger de garantir la tenue de la structure mécanique de l'aéronef lors de manoeuvres particulières extrêmes. Des règlements de certification peuvent notamment prévoir de garantir l'intégrité structurelle de l'aéronef en présence d'une action dite « yaw kick » en langue anglaise. Une telle action consiste à solliciter brusquement le palonnier. En croisière, une action brusque sur le palonnier peut induire sur l'aéronef un stress mécanique à prendre en considération.

Dès lors, l'aéronef peut être dimensionné à cet effet. Un tel dimensionnement a de fait un impact massique.

De manière complémentaire ou alternative, certaines technologies prévoient de limiter l'action d'une commande dans certaines conditions, par exemple le palonnier dans le cadre du « yaw kick ».

Le document FR 2946316 décrit un procédé pour un hélicoptère hybride selon lequel un ordre de contrôle d'un mouvement en lacet est optimisé à l'aide d'un gain variable en fonction d'une commande de poussée.

Le document FR 2946317 décrit non pas un combinateur mais un guignol à rapport variable. Le guignol comporte un tube maître relié à une liaison d'entrée et un tube esclave lié à une liaison de sortie. Le guignol comporte alors un système de liaison à poulies et corde coulissant sur le tube maître, le tube esclave coulissant en conséquence par rapport au système de liaison. Dès lors, une course de la liaison d'entrée induit une course variable de la liaison de sortie en fonction de la position du système de liaison par rapport au tube maître.

Le document US 2010/30157 A1 présente un dispositif apte à combiner un premier et un deuxième ordres de commande du pas de pales d'au moins un ensemble tournant.

La présente invention a alors pour objet de proposer un combinateur innovant conformément à la revendication 1.

L'invention vise un combinateur pour superposer/combiner un premier ordre de commande donné par un premier mouvement d'un premier lien d'entrée et un deuxième ordre de commande donné par un deuxième mouvement d'un deuxième lien d'entrée, ledit combinateur comprenant un lien allongé muni d'une première attache apte à être articulée au premier lien d'entrée.

Le combinateur comporte un renvoi articulé au lien allongé, le renvoi étant mobile en rotation par rapport au lien allongé autour d'un axe de renvoi, le renvoi étant muni d'une attache de sortie apte à être articulée à un lien de sortie, le combinateur comprenant un système de connexion articulé au renvoi, voire au lien allongé, le système de connexion comprenant une deuxième attache apte à être articulée au deuxième lien d'entrée, le système de connexion comprenant un organe à bras variable générant un bras de levier variable en fonction d'un paramètre pilotable du combinateur.

On rappelle que l'expression « bras de levier » désigne une distance entre un point d'application de force, par exemple une zone d'extrémité d'un organe, et son point de pivotement, à savoir son appui. Le terme « variable » signifie que cette distance est modifiable en utilisation, en particulier en vol sur un aéronef.

Dès lors, le premier mouvement du premier lien d'entrée génère un mouvement du lien allongé et par suite un premier déplacement du renvoi. Ce premier déplacement n'a pas d'impact sur le deuxième ordre de commande en raison notamment de l'ancrage du deuxième lien d'entrée. A cet effet, le renvoi ainsi que le lien allongé et le système de connexion peuvent former un parallélogramme déformable.

Le deuxième mouvement du deuxième lien allongé génère un deuxième déplacement du renvoi par rapport au lien allongé. Le deuxième déplacement est différent du premier déplacement et sans impact sur le premier ordre de commande donné en raison notamment de l'ancrage du lien allongé par le premier lien d'entrée.

Par conséquent, le combinateur permet de superposer le premier ordre de commande et le deuxième ordre de commande.

En outre, le système de connexion comporte un organe à bras variable présentant un bras de levier variable permettant de moduler l'autorité du deuxième ordre de commande sur le déplacement du renvoi en fonction d'un paramètre.

Il en résulte que le dispositif de l'invention est un combinateur à gain variable, et non pas un simple combinateur ou un simple guignol à longueur variable.

En particulier, un tel combinateur peut être agencé sur un aéronef, voire un giravion, pour limiter l'autorité d'une commande pilotant le deuxième lien d'entrée, par exemple pour préserver la structure de l'aéronef contre des déplacements brusques.

Sur un hélicoptère hybride à au moins une hélice, le combinateur peut notamment être utilisé pour piloter le pas des pales d'une hélice. Dans ce contexte, le premier ordre de commande peut être un ordre de modification d'une composante d'hélice de pas collectif et le deuxième ordre de commande peut être un ordre de modification d'une composante d'hélice de pas différentiel.

L'autorité sur cette composante d'hélice de pas différentiel peut être limitée, par exemple lorsque la composante d'hélice de pas collectif est élevée. Dès lors, à hautes vitesses d'avancement et donc en présence d'une composante d'hélice de pas collectif élevée, l'autorité d'une commande en lacet est limitée pour éviter un mouvement brusque susceptible de générer des efforts importants sur la structure de l'hélicoptère hybride. La sécurité du vol et/ou le dimensionnement de la structure de l'hélicoptère hybride peuvent éventuellement être optimisés.

Selon un autre exemple et une variante pilotée, l'autorité sur cette composante d'hélice de pas différentiel peut être limitée, par exemple par un système de pilotage automatique, pour éviter le décrochage aérodynamique d'une aile en virage. Si la manoeuvre initiée par un pilote crée un dérapage pouvant amener à un risque de décrochage de l'aile, le système de pilotage automatique peut être configuré pour agir sur le bras de levier du combinateur afin de limiter l'effet d'un palonnier pilotant le deuxième lien d'entrée, et de fait le deuxième ordre de commande.

Selon un autre aspect, un tel combinateur peut de plus s'avérer relativement simple en ne nécessitant pas des dispositifs complexes pour modifier le bras de levier.

Le combinateur peut comprendre une ou plusieurs des caractéristiques qui suivent.

Par exemple, le combinateur peut comporter un support, ledit lien allongé étant en liaison selon au moins un degré de liberté en rotation avec le support, voire uniquement un degré de liberté en rotation, pour être mobile en rotation autour d'un axe de commande par rapport au support lors dudit premier mouvement, le support étant fixe dans un référentiel du combinateur, l'axe de commande étant parallèle à l'axe de renvoi.

Le premier lien de commande peut ainsi piloter une rotation du lien allongé. Le deuxième lien de commande étant ancré, il peut en résulter une translation du renvoi en raison de la déformation du système de connexion. En présence d'un combinateur d'une hélice d'un hélicoptère hybride selon l'exemple précédent, seule la composante d'hélice de pas collectif est alors modifiée.

A l'inverse, le deuxième lien de commande peut provoquer une rotation du renvoi par rapport au lien allongé.

Selon une possibilité compatible avec les précédentes, le système de connexion peut comporter au moins un actionneur de pilotage automatique.

A l'instar de la deuxième commande, l'autorité de l'actionneur de pilotage automatique peut être limitée en fonction du bras de levier lorsque cet actionneur est placé en amont du bras de levier. Ce mécanisme peut permettre l'utilisation de lois de pilotage évoluées au travers du pilotage de l'actionneur de pilotage automatique, utilisées par exemple lors de manoeuvres à haute vitesse ou dans d'autres conditions.

Selon une possibilité compatible avec les précédentes, ledit organe à bras variable est mobile par rapport au lien allongé et ledit paramètre peut être une position du lien allongé dans un référentiel du combinateur, ou ledit paramètre peut être une longueur d'un actionneur de contrôle du combinateur apte à déplacer un axe de pivotement de l'organe à bras variable.

Dès lors, selon une première alternative, la position du lien allongé peut piloter directement la longueur du bras de levier.

Selon une deuxième alternative, un actionneur de contrôle peut piloter le bras de levier en fonction du premier ordre de commande ou d'une autre grandeur, voire en fonction d'un ordre généré par une interface homme-machine. Par exemple, un contrôleur peut être configuré pour piloter l'actionneur de contrôle afin d'ajuster le bras de levier et donc l'autorité du deuxième lien d'entrée en fonction du cas de vol courant, éventuellement pour empêcher un décrochage aérodynamique ou pour déplacer des butées de commande d'un actionneur de pilotage automatique éventuel.

Selon une possibilité compatible avec les précédentes, le système de connexion peut comporter un connecteur, ledit connecteur comprenant un arbre intermédiaire en liaison selon au moins un voire uniquement un degré de liberté en rotation autour d'un axe de soutien avec le lien allongé, le connecteur comportant une tige de liaison en liaison selon au moins un voire uniquement un degré de liberté en rotation autour d'un axe de liaison avec l'arbre intermédiaire et en liaison selon au moins un voire uniquement un degré de liberté en rotation autour d'un axe de sortie avec le renvoi.

Cette architecture permet d'obtenir un mécanisme désolidarisant, tout en les combinant, le premier ordre de commande et le deuxième ordre de commande.

Eventuellement, ledit axe de soutien, ledit axe de liaison, ledit axe de renvoi et l'axe de sortie forment des coins d'un parallélogramme déformable.

Selon une possibilité compatible avec les précédentes, le système de connexion peut comporter une liaison de connexion conférant à l'organe à bras variable une liberté de mouvement en rotation autour d'un axe de pivotement, voire une liberté de coulissement, ledit organe à bras variable étant mobile en rotation autour d'un axe de déplacement, ledit organe à bras variable étant mobile en rotation autour dudit axe de pivotement, ledit bras de levier s'étendant entre l'axe de pivotement et l'axe de déplacement.

Un mécanisme simple peut alors permettre de modifier le bras de levier.

Selon une première réalisation, la liaison de connexion comporte une tige de pivotement qui est portée par le lien allongé et attachée à un guide, ladite tige de pivotement étant solidaire dudit guide qui est mobile en rotation autour de l'axe de pivotement par rapport au lien allongé ou ledit guide étant mobile en rotation autour de l'axe de pivotement par rapport à ladite tige de pivotement qui est solidaire dudit lien allongé, ledit système de connexion comprenant un arbre d'entrée formant ledit organe à bras variable et coulissant par rapport au guide, ledit arbre d'entrée comprenant la deuxième attache, ledit système de connexion comprenant un tronçon de rejointe avec au moins un voire uniquement un degré de liberté en rotation avec l'arbre d'entrée autour dudit axe de déplacement.

La position du lien allongé conditionne alors directement et mécaniquement le bras de levier. Sur un hélicoptère hybride, une autorité en lacet peut être limitée ou augmentée en fonction d'un premier ordre de commande de modification d'une composante d'hélice de pas collectif et par suite de la vitesse d'avancement.

Par exemple et en présence d'un connecteur tel que décrit précédemment, le tronçon de rejointe peut comporter un lien intermédiaire en liaison avec au moins voire uniquement un degré de liberté en rotation autour de l'axe de déplacement avec l'arbre d'entrée et autour d'un axe intermédiaire avec l'arbre intermédiaire.

Cette architecture permet d'obtenir un mécanisme à bras de levier variable désolidarisant, tout en les superposant, le premier ordre de commande et le deuxième ordre de commande.

Par exemple, ledit axe de liaison peut être agencé entre ledit axe intermédiaire et ledit axe de soutien, selon un axe géométrique.

Eventuellement, ledit axe de déplacement, ledit axe intermédiaire, ledit axe de soutien, ledit axe de renvoi, ledit axe de pivotement, ledit axe de sortie et ledit axe de liaison peuvent être parallèles.

Selon une deuxième réalisation et en présence d'un connecteur tel que décrit précédemment, le système de connexion peut comporter un arbre d'entrée muni de la deuxième attache, ledit arbre intermédiaire formant ledit organe à bras variable et comprenant une glissière de la liaison de connexion, la liaison de connexion comprenant une tige de pivotement glissant par rapport à la glissière et connectée à l'arbre intermédiaire, ledit axe de soutien formant ledit axe de déplacement, ladite tige de pivotement s'étendant selon l'axe de pivotement et étant solidaire d'un actionneur de contrôle, ledit bras de levier s'étendant de l'axe de pivotement à l'axe de soutien.

Cette deuxième réalisation permet de mettre en oeuvre des lois diverses pour limiter l'autorité du deuxième lien d'entrée.

Eventuellement, ledit axe de liaison peut être agencé entre ledit axe de déplacement et la tige de pivotement.

Cette architecture permet d'obtenir un mécanisme à bras variable désolidarisant, tout en les superposant, le premier ordre de commande et le deuxième ordre de commande.

Ledit axe de soutien, ledit axe de renvoi, ledit axe de pivotement, ledit axe de sortie et ledit axe de liaison peuvent être parallèles.

Par ailleurs, un aéronef peut comporter au moins un combinateur selon l'invention, ledit premier lien d'entrée et ledit deuxième lien d'entrée étant articulés au combinateur.

Eventuellement, l'aéronef comprenant une hélice à pas variable ou un rotor muni de pales à pas variable agissant sur le lacet de l'aéronef, ledit aéronef comprenant une commande de poussée pour modifier une composante de pas collectif du pas desdites pales et une commande de lacet pour modifier une composante de pas différentiel desdits pales, ledit premier lien d'entrée peut être relié à la commande de poussée, ledit deuxième lien d'entrée étant relié à commande de lacet, ledit lien de sortie étant relié à au moins un actionneur de pas pour piloter le pas desdites pales.

Selon une possibilité compatible avec les précédentes, ledit aéronef peut comprendre une interface de contrôle d'autorité en communication avec un actionneur de contrôle configuré pour modifier ledit bras de levier.

Le terme « communication » signifie que l'interface de contrôle d'autorité est en liaison filaire ou non filaire avec un actionneur de contrôle pour lui transmettre un signal de commande, sous forme électrique ou optique par exemple.

L'invention et ses avantages apparaîtront avec plus de détails dans le cadre de la description qui suit avec des exemples donnés à titre illustratif en référence aux figures annexées qui représentent :
la figure 1, un schéma d'un combinateur selon l'invention,
la figure 2, un schéma illustrant le combinateur de la figure 1 au repos,
la figure 3, un schéma illustrant le combinateur de la figure 1 en présence d'un deuxième ordre de commande,
la figure 4, un schéma illustrant le combinateur de la figure 1 en présence d'un premier ordre de commande,
la figure 5, un schéma illustrant le combinateur de la figure 1 au repos en présence simultanément d'un premier ordre de commande et d'un deuxième ordre de commande,
la figure 6, une vue d'un combinateur selon l'invention muni d'un actionneur de contrôle, et
la figure 7, un schéma d'un aéronef comprenant un combinateur selon l'invention.

Les éléments présents dans plusieurs figures distinctes sont affectés d'une seule et même référence.

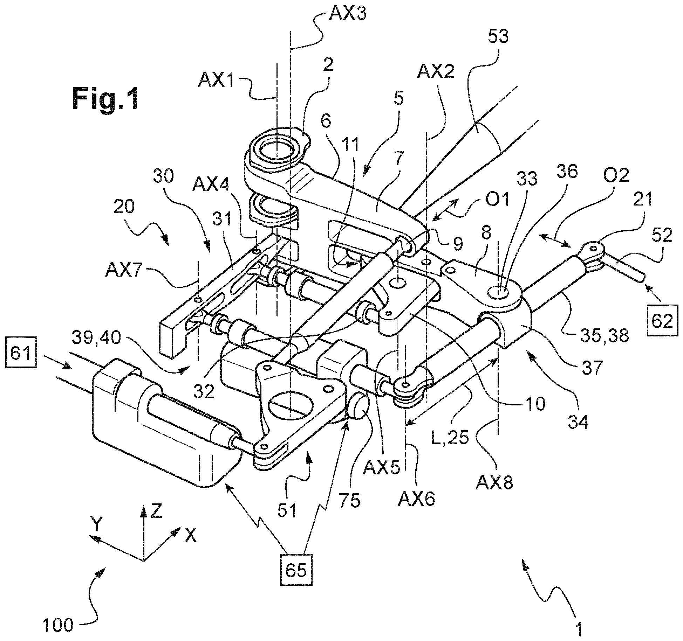

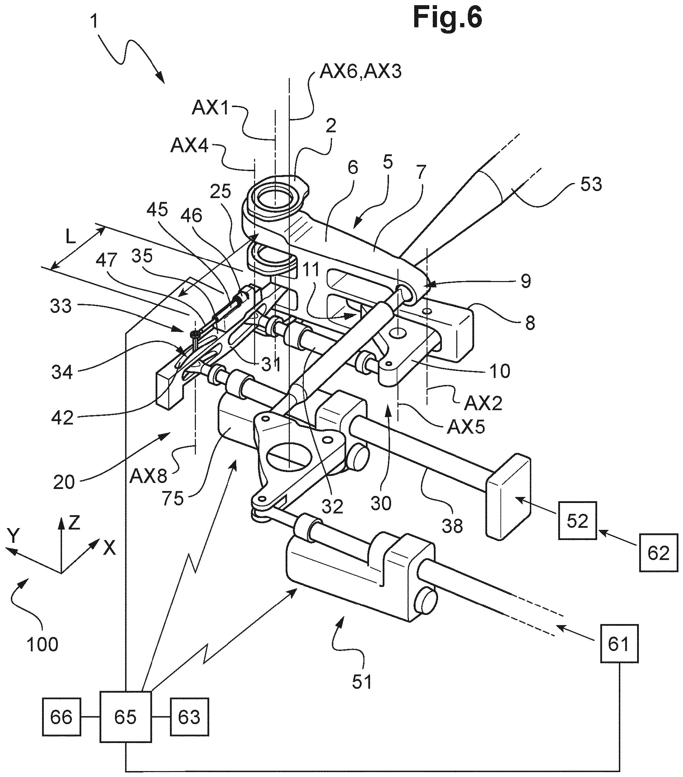

Les figures 1 et 6 présentent deux réalisations d'un combinateur 1 selon l'invention.

Les figures 1 et 6 présentent de plus le référentiel 100 des combinateurs 1. Ce référentiel 100 comporte trois axes X, Y et Z orthogonaux les uns par rapport aux autres.

Quelle que soit la réalisation et en référence à la figure 1, un combinateur 1 selon l'invention est un combinateur à bras de levier variable. Le combinateur 1 pilote un lien de sortie 53 en combinant/superposant un premier ordre de commande O1 donné par un premier mouvement d'un premier lien d'entrée 51 et un deuxième ordre de commande O2 donné par un deuxième mouvement d'un deuxième lien d'entrée 52, le deuxième ordre de commande O2 ayant une autorité variable sur le lien de sortie 53.

Dès lors, le premier lien d'entrée 51 peut comprendre au moins une bielle, au moins un organe de connexion et/ou au moins un actionneur. Le premier lien d'entrée 51 peut être mis en mouvement via une première commande 61. Une telle première commande 61 peut comprendre un levier, un actionneur de pilotage automatique, un manche...

Le deuxième lien d'entrée 52 peut comprendre au moins une bielle, au moins un organe de connexion et/ou au moins un actionneur. Le deuxième lien d'entrée 52 peut être mis en mouvement via une deuxième commande 62. Une telle deuxième commande 62 peut comprendre un palonnier, un actionneur de pilotage automatique, un manche...

Indépendamment de la réalisation et de son implantation, un combinateur 1 selon l'invention comprend un lien allongé 5. Le lien allongé 5 est muni d'une première attache 9 articulée au premier lien d'entrée 51. Le terme « attache » désigne tout organe permettant de lier un objet à un autre en lui conférant la liberté de mouvement requise en coopérant avec un pivot, une liaison rotule ou autres. Le terme « attache » désigne par exemple un simple oeillet, une chape male ou femelle à une ou plusieurs joues...

En particulier, le lien allongé 5 peut être articulé à un support 2 pour être mobile en rotation autour d'un axe de commande AX1 dans le référentiel 100. Par exemple, le lien allongé 5 possède une embase 6 articulée au support 2 par une liaison lui conférant au moins un degré de liberté en rotation autour de l'axe de commande AX1, par exemple une liaison pivot. L'embase 6 peut en outre être solidaire d'au moins un bras 7, 8 du lien allongé 5, et de deux bras 7, 8 selon l'exemple illustré. Dès lors, un premier bras 7 est articulé selon la figure 1 par la première attache 9 au premier lien d'entrée 51. Par exemple, la première attache 9 est une articulation à rotule.

De plus, le combinateur 1 comporte un renvoi 10 articulé au lien allongé 5.

Le renvoi 10 est mobile en rotation par rapport au lien allongé 5 au moins autour d'un axe de renvoi AX2, voire uniquement autour de l'axe de renvoi AX2. L'axe de commande AX1 peut être parallèle à l'axe de renvoi AX2.

Par exemple, le renvoi 10 est articulé au lien allongé 5 par une liaison pivot.

Selon l'exemple illustré, le renvoi 10 est articulé au deuxième bras 8. Le renvoi 10 peut avoir une forme en L, une forme triangulaire ou autres.

Le renvoi 10 est de plus muni d'une attache de sortie 11 articulée au lien de sortie 53. Par exemple, l'attache de sortie 11 comporte une chape en liaison pivot ou à rotule avec le lien de sortie 53.

Ainsi, un mouvement du premier lien d'entrée 51 entraine un mouvement du lien allongé 5 qui provoque un mouvement du renvoi 10 et donc du lien de sortie 53.

Par ailleurs, le combinateur 1 comprend un système de connexion 20 reliant mécaniquement le renvoi 10 et le deuxième lien d'entrée 52. Le système de connexion 20 est dès lors d'une part articulé au renvoi 10 et, d'autre part, comprend une deuxième attache 21 apte à être articulée au deuxième lien d'entrée 52.

Ainsi, un mouvement du deuxième lien d'entrée 52 entraine un mouvement du système de connexion 20 qui provoque un mouvement du renvoi 10 et donc du lien de sortie 53.

Selon les possibilités illustrées, le système de connexion 20 peut comporter un connecteur 30 pour désolidariser le premier ordre de commande O1 et le deuxième ordre de commande 02.

Ce connecteur 30 possède un arbre intermédiaire 31. L'arbre intermédiaire 31 est en liaison avec le lien allongé 5 en possédant au moins un degré de liberté en rotation autour d'un axe de soutien AX3, voire uniquement un tel degré de liberté. Par exemple, l'arbre intermédiaire est articulé à l'embase 6 ou au deuxième bras 8. Dès lors, le connecteur 30 comporte une articulation rendant l'arbre intermédiaire 31 mobile en rotation autour de l'axe de soutien AX3 par rapport au lien allongé 5.

Les termes « arbre » et « tige » peuvent chacun désigner un élément longiligne de connexion mécanique usuel tel qu'un arbre, une tige, une bielle, un tube...

De plus, le connecteur 30 comporte une tige de liaison 32 en liaison avec l'arbre intermédiaire 31 en possédant au moins un degré de liberté en rotation autour d'un axe de liaison AX4 avec l'arbre intermédiaire 31, voire uniquement un tel degré de liberté. Dès lors, le connecteur 30 comporte une articulation usuelle rendant l'arbre intermédiaire 31 et la tige de liaison 32 mobiles en rotation l'un par rapport à l'autre autour de l'axe de liaison AX4.

Enfin, la tige de liaison 32 est en liaison avec le renvoi 10 en possédant au moins un degré de liberté en rotation autour d'un axe de sortie AX5 avec le renvoi 10, voire uniquement un tel degré de liberté. Dès lors, le connecteur 30 comporte une articulation usuelle rendant la tige de liaison 32 et le renvoi 10 mobiles en rotation l'un par rapport à l'autre autour de l'axe de sortie AX5.

L'axe de soutien AX3, l'axe de liaison AX4, l'axe de renvoi AX2 et l'axe de sortie AX5 peuvent former des coins d'un parallélogramme déformable muni d'au moins une partie de l'arbre intermédiaire 31, de la tige de liaison 32, d'au moins une partie du renvoi 10 et d'au moins une partie du lien allongé 5. Cette architecture permet de dissocier le premier ordre de commande O1 et le deuxième ordre de commande O2.

Selon un autre aspect, le combinateur 1 peut comprendre un ou plusieurs actionneurs de pilotage automatique 75, par exemple au sein du système de connexion 20. Un tel actionneur de pilotage automatique 75 peut être piloté par un contrôleur 65.

Le contrôleur 65 peut comprendre par exemple au moins un processeur et au moins une mémoire, au moins un circuit intégré, au moins un système programmable, au moins un circuit logique, ces exemples ne limitant pas la portée donnée à l'expression « contrôleur ». Le terme processeur peut désigner aussi bien une unité centrale de traitement connue sous l'acronyme CPU, une unité graphique de traitement GPU, une unité digitale connue sous l'acronyme DSP, un microcontrôleur...

Le contrôleur 65 peut mémoriser une ou plusieurs lois de pilotage pour commander le ou les actionneurs de pilotage automatique 75 éventuels. A cet effet, le contrôleur 65 peut être connecté à au moins un senseur 66. Par exemple, cet au moins un senseur 66 comporte un senseur de position d'une premier commande ou d'une deuxième commande, un senseur de position mesurant une position du renvoi 10, et/ou un senseur de vitesse de l'aéronef équipé du combinateur 1 ...

Indépendamment de la présence de ces diverses options, le système de connexion 20 présente un organe à bras variable générant un bras de levier 25 variable en fonction d'un paramètre pilotable du combinateur. Dès lors, l'autorité du deuxième ordre de commande O2 sur le mouvement du renvoi 10 est modulée par le bras de levier 25.

Par exemple, le système de connexion 20 comporte une liaison de connexion 33, 34 conférant à d'un organe à bras variable 35 une liberté de mouvement en rotation autour d'un axe de pivotement AX8, voire une liberté de coulissement. La liaison de connexion comporte un moyen de pivotement 33 qui rend un moyen de coulissement 34 mobile en rotation autour d'un axe de pivotement AX8. De plus, l'organe à bras variable 35 est aussi mobile en rotation autour d'un axe de déplacement AX6. Le système de connexion 20 comporte alors un bras de levier 25 variable entre l'axe de pivotement AX8 et l'axe de déplacement AX6.

Le paramètre pilotant le bras de levier 25 peut être une position du lien allongé 5 dans le référentiel 100 du combinateur 1 selon la figure 1 ou une longueur L d'un actionneur de contrôle 45 du combinateur 1 selon la figure 6.

Selon la première réalisation de la figure 1, la liaison de connexion peut comporter une tige de pivotement 36 qui est portée par le lien allongé 5, par exemple par le deuxième bras 8. La tige de pivotement 36 porte de plus un guide 37, de la forme d'un tube creux selon l'exemple illustré. Ainsi, le système de connexion 20 et le guide 37 sont dans un même plan, le système de connexion 20 se déformant dans ce plan.

Dès lors, selon une première alternative, la tige de pivotement 36 est d'une part solidaire du guide 37 et, d'autre part, mobile en rotation autour de l'axe de pivotement AX8 par rapport au lien allongé 5. Selon une deuxième alternative, la tige de pivotement 36 est solidaire du lien allongé 5, le guide 37 étant alors mobile en rotation autour de l'axe de pivotement AX8 par rapport à la tige de pivotement 36.

Dans les deux alternatives, le guide 37 est mobile en rotation par rapport au lien allongé 5 autour de l'axe de pivotement AX8.

De plus, l'organe à bras variable 35 prend la forme d'un arbre d'entrée 38 porté par le guide 37 et coulissant dans le guide 37.

Cet arbre d'entrée 38 est en outre équipé de la deuxième attache 21. De plus, un tronçon de rejointe 39 est en liaison avec l'arbre d'entrée 38 en possédant au moins un degré de liberté en rotation autour de l'axe de déplacement AX6, voire uniquement un tel degré de liberté. Dès lors, le combinateur 1 comporte une articulation usuelle liant, par exemple en liaison pivot, l'arbre d'entrée 38 et le tronçon de rejointe 39.

Par exemple, le tronçon de rejointe 39 comporte un lien intermédiaire 40 mobile en rotation autour de l'axe de déplacement AX6 par rapport à l'arbre d'entrée 38 et autour d'un axe intermédiaire AX7 par rapport l'arbre intermédiaire 31. Dès lors, le combinateur 1 comporte une articulation usuelle rendant l'arbre d'entrée 38 et le tronçon de rejointe 39 mobiles en rotation l'un par rapport à l'autre. Une autre articulation usuelle rend l'arbre intermédiaire 31 et le tronçon de rejointe 39 mobiles en rotation l'un par rapport à l'autre. Le lien intermédiaire 40 peut comprendre une ou plusieurs bielles ou équivalent et/ou un actionneur de pilotage automatique 75...

Par ailleurs, ledit axe de liaison AX4 est alors agencé entre l'axe intermédiaire AX7 et l'axe de soutien AX3 selon un axe géométrique.

En outre, l'axe de déplacement AX6, l'axe intermédiaire AX7, l'axe de soutien AX3, l'axe de renvoi AX2, l'axe de sortie AX5, l'axe de pivotement AX8 et l'axe de liaison AX4 sont parallèles.

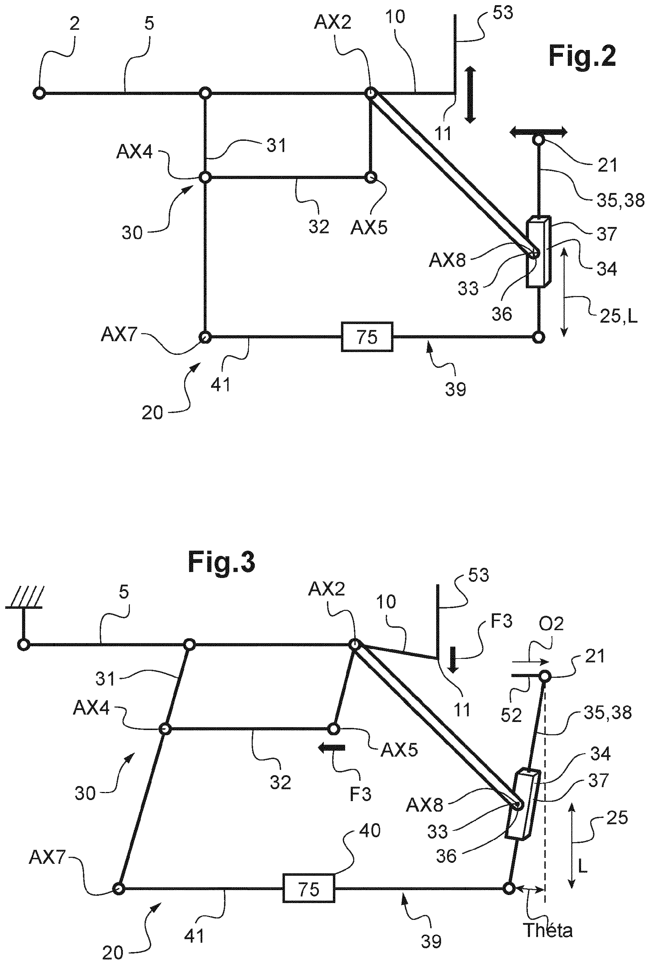

Les figures 2 à 5 explicitent de manière schématique le fonctionnement du combinateur 1 de la figure 1.

La figure 2 présente le combinateur 1 au repos. Le bras de levier 25 a une longueur R.

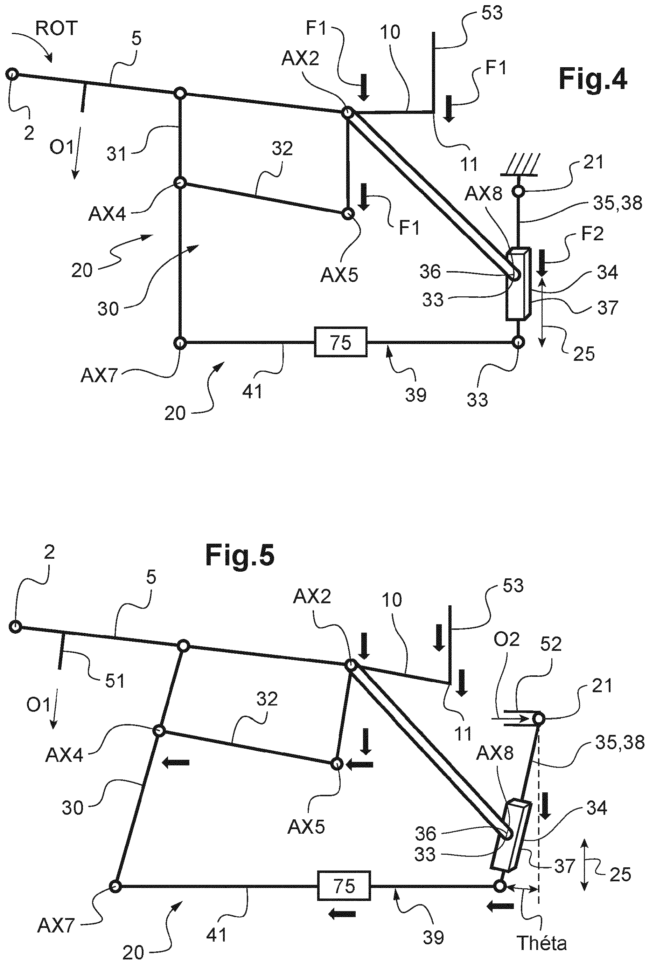

La figure 4 illustre l'émission uniquement d'un premier ordre de commande O1. La deuxième attache 21 est alors ancrée, cet ancrage étant représenté schématiquement avec des traits obliques.

Le premier ordre de commande O1 génère alors une rotation ROT du lien allongé 5. Le système de connexion 20 se déforme en raison de l'ancrage de l'arbre d'entrée 38. En particulier le parallélogramme formé par le connecteur 30, le renvoi 10 et le lien allongé 5 se déforme. Le renvoi 10 se déplace uniquement en translation selon les flèches F1. Le guide 37 se déplace le long de l'arbre d'entrée 38 selon la flèche F2 ce qui modifie le bras de levier 25. La composante du mouvement du lien de sortie 53 piloté par le deuxième lien d'entrée 52 n'est pas impactée.

La figure 3 illustre l'émission uniquement d'un deuxième ordre de commande O2. Le lien allongé 5 est alors ancré. Le deuxième ordre de commande O2 génère une rotation de l'arbre d'entrée 38. Le système de connexion 20 se déforme en raison de l'ancrage du lien allongé 5. En particulier le parallélogramme formé par le connecteur 30, le renvoi 10 et le lien allongé 5 se déforme. Le renvoi 10 se déplace uniquement en rotation selon les flèches F3. Le déplacement du renvoi 10 est fonction du déplacement angulaire theta de l'arbre d'entrée 38 et du bras de levier 25, ce bras de levier 25 dépendant de la position du lien allongé 5 comme illustré précédemment. La composante du mouvement du lien de sortie 53 piloté par le premier lien d'entrée 51 n'est pas impactée.

La figure 5 illustre un déplacement conjoint du premier lien d'entrée 51 et du deuxième lien d'entrée 52. Le premier ordre de commande O1 provoque la rotation du lien allongé 5, et par suite du renvoi 10.

De plus, le bras de levier 25 est modifié en conséquence. Le deuxième ordre de commande O2 provoque une rotation du renvoi 10 qui est fonction notamment de ce bras de levier 25 et du déplacement angulaire theta de l'arbre d'entrée 38 et du bras de levier 25.

Ainsi, la première réalisation propose un combinateur 1 mécanique liant l'autorité du deuxième ordre de commande O2 à l'amplitude du premier ordre de commande O1. Plus le premier ordre de commande O1 génère un déplacement angulaire important du lien allongé 5 selon un premier sens, plus le bras de levier 25 est faible et l'autorité du deuxième lien d'entrée 52 est réduite.

La figure 6 illustre une deuxième réalisation, le système de connexion 20 comporte alors un arbre d'entrée 38 muni de la deuxième attache 21. L'arbre intermédiaire 31 forme ledit organe à bras variable et comprend alors une glissière 42. Par exemple, cette glissière 42 prend la forme d'une fente en arc de cercle ménagée dans l'arbre intermédiaire 31.

Dès lors, la liaison de connexion comprend une tige de pivotement 36 s'étendant selon l'axe de pivotement pour coulisser dans la glissière 42. La tige de pivotement 36 est en outre solidaire d'un actionneur de contrôle 45. La tige de pivotement 36 est articulée à l'arbre d'entrée 38. Par exemple, cet actionneur de contrôle 45 comporte un corps 46 et une tige de commande 47 mobile en translation par rapport au corps 46. Le corps 46 est alors solidarisé à l'arbre intermédiaire 31 par des moyens usuels et la tige de commande 47 est solidarisée à la tige de pivotement 36. Alternativement, l'actionneur de contrôle 45 peut avoir un corps mobile.

Il en résulte que l'axe de soutien AX3 de rotation de l'arbre intermédiaire 31 forme ledit axe de déplacement AX6. Le bras de levier 25 s'étend alors entre la tige de pivotement 36 et l'axe de soutien AX3. De plus, l'axe de liaison AX4 peut alors être agencé entre l'axe de déplacement AX6 et la tige de pivotement 36. En outre, l'axe de soutien AX3, l'axe de renvoi AX2, l'axe de sortie AX5, l'axe de pivotement AX8 et l'axe de liaison AX4 sont parallèles.

L'actionneur de contrôle 45 peut, en outre, être relié par une liaison filaire ou non filaire au contrôleur 65. Ce contrôleur 65 est configuré pour émettre un signal, électrique ou optique, numérique ou analogique, vers l'actionneur de contrôle 45 pour atteindre le bras de levier 25 souhaité en déplaçant la tige de pivotement 36.

Eventuellement, le contrôleur 65 est relié à cet effet à au moins un senseur 66 et /ou à une interface 63 homme-machine de contrôle d'autorité. Une telle interface 63 homme-machine de contrôle d'autorité peut comprendre un bouton, une dalle tactile, un levier... L'interface 63 homme-machine de contrôle d'autorité transmet alors au contrôleur 65 un signal d'entrée, électrique ou optique, numérique ou analogique, porteur d'une valeur de bras de levier 25 à atteindre ou d'un ordre de variation du bras de levier 25. Le contrôleur 65 comprend alors une ou plusieurs lois fonctions de l'ordre porté par le signal d'entrée et/ou de signaux de mesure transmis par le ou les senseurs 66. Eventuellement, un fonctionnement identique au fonctionnement des figures 2 à 5 peut être obtenu, le contrôleur 65 pilotant alors l'actionneur de contrôle 45 en fonction du premier ordre de commande O1.

Quelle que soit la réalisation, un combinateur 1 selon l'invention peut être agencé sur un aéronef.

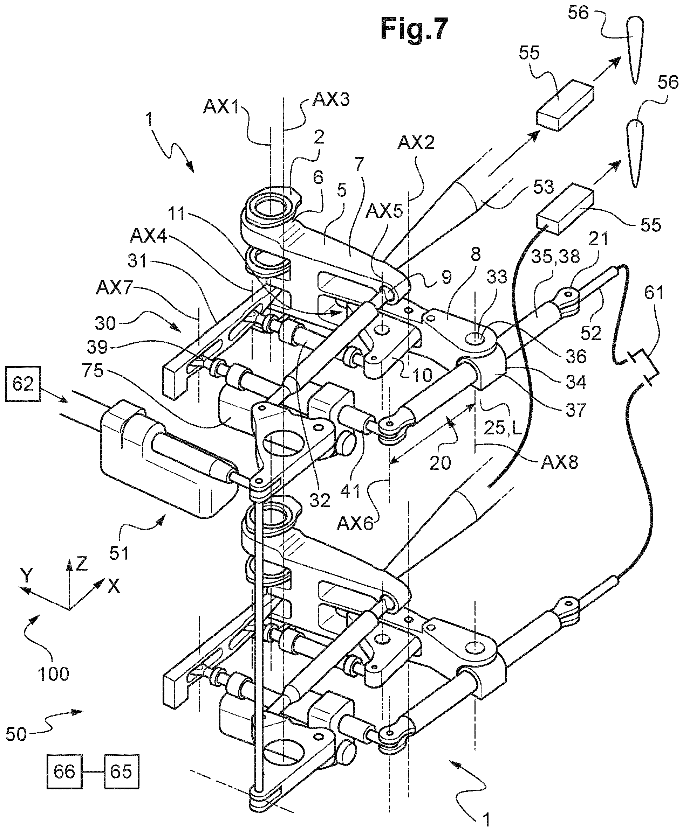

Selon la figure 7, un tel combinateur 1 peut être agencé sur un aéronef 50. A titre illustratif, l'aéronef 50 comporte des pales 56 ayant un pas variable. Le pas des pales 56 peut être modifié via un ou plusieurs actionneurs de pas 55. Le lien de sortie 53 d'un combinateur 1 peut alors piloter un actionneur de pas 55.

Selon l'illustration de la figure 7, l'aéronef 50 est un hélicoptère hybride ayant au moins une aile, au moins un rotor et deux hélices munies des pales 56. Deux actionneurs de pas 55 peuvent prendre la forme respectivement de deux distributeurs hydrauliques agissant sur le pas des pales 56 des deux hélices. Le pas des pales 56 des hélices peut comprendre une composante de pas collectif et une composante de pas différentiel.

Selon un autre exemple, l'aéronef 50 est un hélicoptère hybride ayant au moins une aile, deux rotors et une hélice, le pas des pales des rotors ayant alors aussi une composante de pas différentiel, voire une composante de pas collectif voire une composante de pas cyclique.

Dès lors, une commande de poussée 62 peut piloter une composante de pas collectif. Une commande de lacet 61 peut piloter la composante de pas différentiel.

Ces exemples sont donnés à titre illustratif, le combinateur 1 pouvant être installé sur tous systèmes nécessitant de générer un ordre en combinant deux ordre de commandes différents sans sortir du cadre des revendications de combinateur.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention telle que définie par les revendications annexées.

## Revendications

1. Combinateur (1) pour superposer un premier ordre de commande (O1) donné par un premier mouvement d'un premier lien d'entrée (51) et un deuxième ordre de commande (O2) donné par un deuxième mouvement d'un deuxième lien d'entrée (52), ledit combinateur (1) comprenant un lien allongé (5) muni d'une première attache (9) apte à être articulée au premier lien d'entrée (51), le combinateur (1) comporte un renvoi (10) articulé au lien allongé (5), le renvoi (10) étant mobile en rotation par rapport au lien allongé (5) autour d'un axe de renvoi (AX2), le renvoi (10) étant muni d'une attache de sortie (11) apte à être articulée à un lien de sortie (53), le combinateur (1) comprenant un système de connexion (20) articulé au renvoi (10), le système de connexion (20) comprenant une deuxième attache (21) apte à être articulée au deuxième lien d'entrée (52), **caractérisé en ce que** le système de connexion (20) comprend un organe à bras variable (35) générant un bras de levier (25) variable en fonction d'un paramètre pilotable du combinateur (1).

2. Combinateur selon la revendication 1,
**caractérisé en ce que** ledit combinateur (1) comporte un support (2), ledit lien allongé (5) étant en liaison selon au moins un degré de liberté en rotation avec le support (2) pour être mobile en rotation autour d'un axe de commande (AX1) par rapport au support (2) lors dudit premier mouvement, le support (2) étant fixe dans un référentiel (100) du combinateur (1), l'axe de commande (AX1) étant parallèle à l'axe de renvoi (AX2).

3. Combinateur selon l'une quelconque des revendications 1 à 2, **caractérisé en ce que** ledit organe à bras variable (35) est mobile par rapport au lien allongé (5) et ledit paramètre est une position du lien allongé (5) dans un référentiel (100) du combinateur (1), ou ledit paramètre est une longueur d'un actionneur de contrôle (45) du combinateur (1) apte à déplacer un axe de pivotement (AX8) de l'organe à bras variable (35).

4. Combinateur selon l'une quelconque des revendications 1 à 3, **caractérisé en ce que** ledit système de connexion (20) comporte un connecteur (30), ledit connecteur (30) comprenant un arbre intermédiaire (31) en liaison selon au moins un degré de liberté en rotation autour d'un axe de soutien (AX3) avec le lien allongé (5), le connecteur (30) comportant une tige de liaison (32) en liaison selon au moins un degré de liberté en rotation autour d'un axe de liaison (AX4) avec l'arbre intermédiaire (31) et en liaison selon au moins un degré de liberté en rotation autour d'un axe de sortie (AX5) avec le renvoi (10).

5. Combinateur selon la revendication 4,
**caractérisé en ce que** ledit axe de soutien (AX3), ledit axe de liaison (AX4), ledit axe de renvoi (AX2) et l'axe de sortie (AX5) forment des coins d'un parallélogramme déformable.

6. Combinateur selon l'une quelconque des revendications 1 à 5, **caractérisé en ce que** ledit système de connexion (20) comporte une liaison de connexion (33, 34) conférant à l'organe à bras variable (35) une liberté de mouvement en rotation autour d'un axe de pivotement (AX8), ledit organe à bras variable (35) étant mobile en rotation autour d'un axe de déplacement (AX6), ledit organe à bras variable (35) étant mobile en rotation autour dudit axe de pivotement (AX8), ledit bras de levier (25) s'étendant entre l'axe de pivotement (AX8) et l'axe de déplacement (AX6).

7. Combinateur selon la revendication 6,
**caractérisé en ce que** ladite liaison de connexion (33) comporte une tige de pivotement (36) qui est portée par le lien allongé (5) et attachée à un guide (37), ladite tige de pivotement (36) étant solidaire dudit guide (37) qui est mobile en rotation autour de l'axe de pivotement (AX8) par rapport au lien allongé (5) ou ledit guide (37) étant mobile en rotation autour de l'axe de pivotement (AX8) par rapport à ladite tige de pivotement (36) qui est solidaire dudit lien allongé (5), ledit système de connexion (20) comprenant un arbre d'entrée (38) formant ledit organe à bras variable (35) et coulissant par rapport guide (37), ledit arbre d'entrée (38) comprenant la deuxième attache (21), ledit système de connexion (20) comprenant un tronçon de rejointe (39) en liaison avec au moins un degré de liberté en rotation avec l'arbre d'entrée (38) autour dudit axe de déplacement (AX6).

8. Combinateur selon la revendication 7 et l'une quelconque des revendications 4 à 5,
**caractérisé en ce que** ledit tronçon de rejointe (39) comporte un lien intermédiaire (40) en liaison avec au moins un degré de liberté en rotation autour de l'axe de déplacement (AX6) avec l'arbre d'entrée (38) et autour d'un axe intermédiaire (AX7) avec l'arbre intermédiaire (31).

9. Combinateur selon la revendication 8,
**caractérisé en ce que** ledit axe de liaison (AX4) est agencé entre ledit axe intermédiaire (AX7) et ledit axe de soutien (AX3) selon un axe géométrique.

10. Combinateur selon l'une quelconque des revendications 8 à 9, **caractérisé en ce que** ledit axe de déplacement (AX6), ledit axe intermédiaire (AX7), ledit axe de soutien (AX3), ledit axe de renvoi (AX2), ledit axe de sortie (AX5), ledit axe de pivotement (AX8) et ledit axe de liaison (AX4) sont parallèles.

11. Combinateur selon la revendication 6 et l'une quelconque des revendications 4 à 5,
**caractérisé en ce que** ledit système de connexion (20) comporte un arbre d'entrée (38) muni de la deuxième attache (21), ledit arbre intermédiaire (31) formant ledit organe à bras variable et comprenant une glissière (42) de la liaison de connexion (34), la liaison de connexion (34) comprenant une tige de pivotement (36) glissant par rapport à la glissière (42) et connectée à l'arbre intermédiaire (38), ledit axe de soutien (AX3) formant ledit axe de déplacement (AX6), ladite tige de pivotement (36) s'étendant selon l'axe de pivotement (AX8) et étant solidaire d'un actionneur de contrôle (45), ledit bras de levier (25) s'étendant de l'axe de pivotement (AX8) à l'axe de soutien (AX3).

12. Combinateur selon la revendication 11,
**caractérisé en ce que** ledit axe de liaison (AX4) est agencé entre ledit axe de déplacement (AX6) et la tige de pivotement (36).

13. Combinateur selon l'une quelconque des revendications 11 à 12,
**caractérisé en ce que** ledit axe de soutien (AX3), ledit axe de renvoi (AX2), ledit axe de sortie (AX5), ledit axe de pivotement (AX8) et ledit axe de liaison (AX4) sont parallèles.

14. Combinateur selon l'une quelconque des revendications 1 à 13,
**caractérisé en ce que** ledit système de connexion (20) comporte au moins un actionneur de pilotage automatique (75).

15. Aéronef (50),
**caractérisé en ce que** ledit aéronef comporte au moins un combinateur (1) selon l'une quelconque des revendications 1 à 14, ledit premier lien d'entrée (51) et ledit deuxième lien d'entrée (52) étant articulés au combinateur (1).

16. Aéronef selon la revendication 15,
**caractérisé en ce que** ledit aéronef comprenant une hélice à pas variable ou un rotor muni de pales (55) à pas variable agissant sur le lacet de l'aéronef, ledit aéronef comprenant une commande de poussée (62) pour modifier une composante de pas collectif du pas desdites pales (55) et une commande de lacet (61) pour modifier une composante de pas différentiel desdits pales (56), ledit premier lien d'entrée (51) est relié à la commande de poussée (62), ledit deuxième lien d'entrée (52) étant relié à commande de lacet (61), ledit lien de sortie (53) étant relié à au moins un actionneur de pas (56) pilotant le pas desdites pales (55).

17. Aéronef selon l'une quelconque des revendications 15 à 16, **caractérisé en ce que** ledit aéronef comprend une interface (63) de contrôle d'autorité en communication avec un actionneur de contrôle (45) configuré pour modifier ledit bras de levier (25).

## Patentansprüche

1. Kombinator (1) zum Überlagern eines ersten Steuerbefehls (O1), der durch eine erste Bewegung eines ersten Eingangsglieds (51) gegeben wird, und eines zweiten Steuerbefehls (O2), der durch eine zweite Bewegung eines zweiten Eingangsglieds (52) gegeben wird, wobei der Kombinator (1) ein langgestrecktes Verbindungsglied (5) umfasst, das mit einer ersten Bindung (9) versehen ist, die geeignet ist, gelenkig mit dem ersten Eingangsglied (51) verbunden zu werden, wobei der Kombinator (1) einen Umlenker (10) umfasst, der gelenkig mit dem langgestreckten Verbindungsglied (5) verbunden ist, wobei der Umlenker (10) in Bezug auf das langgestreckte Verbindungsglied (5) um eine Umlenkachse (AX2) drehbar ist, der Umlenker (10) mit einer Ausgangsbindung (11) versehen ist, die geeignet ist, gelenkig mit einem Ausgangsglied (53) verbunden zu werden, der Kombinator (1) ein Verbindungssystem (20) umfasst, das gelenkig mit dem Umlenker (10) verbunden ist, das Verbindungssystem (20) eine zweite Bindung (21) umfasst, die geeignet ist, an dem zweiten Eingangsglied (52) angelenkt zu werden,
**dadurch gekennzeichnet, dass** das Verbindungssystem (20) ein Organ mit variablem Arm (35) umfasst, das einen in Abhängigkeit von einem steuerbaren Parameter des Kombinators (1) variablen Hebelarm (25) erzeugt.

2. Kombinator nach Anspruch 1,
**dadurch gekennzeichnet, dass** der Kombinator (1) einen Träger (2) umfasst, dass das langgestreckte Verbindungsglied (5) gemäß mindestens einem Drehfreiheitsgrad mit dem Träger (2) in Verbindung steht, um bei der ersten Bewegung um eine Steuerachse (AX1) in Bezug auf den Träger (2) drehbeweglich zu sein, dass der Träger (2) in einem Bezugssystem (100) des Kombinators (1) feststehend ist und dass die Steuerachse (AX1) parallel zur Umlenkachse (AX2) verläuft.

3. Kombinator nach einem der Ansprüche 1 bis 2,
**dadurch gekennzeichnet, dass** das Organ mit variablem Arm (35) in Bezug auf das langgestreckte Verbindungsglied (5) beweglich ist und der Parameter eine Position des langgestreckten Verbindungsglieds (5) in einem Bezugssystem (100) des Kombinators (1) ist, oder der Parameter eine Länge eines Steuerstellglieds (45) des Kombinators (1) ist, das geeignet ist, eine Schwenkachse (AX8) des Organs mit variablem Arm (35) zu verschieben.

4. Kombinator nach einem der Ansprüche 1 bis 3,
**dadurch gekennzeichnet, dass** das Verbindungssystem (20) einen Verbinder (30) umfasst, wobei der Verbinder (30) eine Zwischenwelle (31) umfasst, die in mindestens einem Drehfreiheitsgrad um eine Stützachse (AX3) mit dem langgestreckten Verbindungsglied (5) verbunden ist, wobei der Verbinder (30) einen Verbindungsstift (32) aufweist, der in mindestens einem Drehfreiheitsgrad um eine Verbindungsachse (AX4) mit der Zwischenwelle (31) verbunden ist und in mindestens einem Drehfreiheitsgrad um eine Ausgangsachse (AX5) mit dem Umlenker (10) in Verbindung steht.

5. Kombinator nach Anspruch 4,
**dadurch gekennzeichnet, dass** die Stützachse (AX3), die Verbindungsachse (AX4), die Umlenkachse (AX2) und die Ausgangsachse (AX5) Ecken eines verformbaren Parallelogramms bilden.

6. Kombinator nach einem der Ansprüche 1 bis 5,
**dadurch gekennzeichnet, dass** das genannte Verbindungssystem (20) eine Anschlussverbindung (33, 34) umfasst, die dem Organ mit variablem Arm (35) eine Drehbewegungsfreiheit um eine Schwenkachse (AX8) verleiht, dass das Organ mit variablem Arm (35) um eine Verschiebungsachse (AX6) drehbar ist, dass das Organ mit variablem Arm (35) um die Schwenkachse (AX8) drehbar ist, und dass sich der Hebelarm (25) zwischen der Schwenkachse (AX8) und der Verschiebungsachse (AX6) erstreckt.

7. Kombinator nach Anspruch 6,
**dadurch gekennzeichnet, dass** die Anschlussverbindung (33) eine Schwenkstange (36) aufweist, die von dem langgestreckten Verbindungsglied (5) getragen und an einer Führung (37) befestigt ist, dass die Schwenkstange (36) fest mit der Führung (37) verbunden ist, die um die Schwenkachse (AX8) in Bezug auf das langgestreckte Verbindungsglied (5) drehbar ist, oder dass die Führung (37) um die Schwenkachse (AX8) in Bezug auf die fest mit dem langgestreckten Verbindungsglied (5) verbundene Schwenkstange (36) drehbar ist, dass das Verbindungssystem (20) eine Eingangswelle (38) umfasst, die das Organ mit variablem Arm (35) bildet und in Bezug auf die Führung (37) verschiebbar ist, dass die Eingangswelle (38) die zweite Bindung (21) umfasst, und dass das Verbindungssystem (20) einen Kuppelabschnitt (39) umfasst, der mit mindestens einem Drehfreiheitsgrad um die Verschiebungsachse (AX6) mit der Eingangswelle (38) in Verbindung steht.

8. Kombinator nach Anspruch 7 und einem der Ansprüche 4 bis 5,
**dadurch gekennzeichnet, dass** der Kuppelabschnitt (39) ein Zwischenverbindungsglied (40) aufweist, das mit mindestens einem Drehfreiheitsgrad um die Verschiebungsachse (AX6) mit der Eingangswelle (38) und um eine Zwischenachse (AX7) mit der Zwischenwelle (31) in Verbindung steht.

9. Kombinator nach Anspruch 8,
**dadurch gekennzeichnet, dass** die Verbindungsachse (AX4) zwischen der Zwischenachse (AX7) und der Stützachse (AX3) entlang einer geometrischen Achse angeordnet ist.

10. Kombinator nach einem der Ansprüche 8 bis 9,
**dadurch gekennzeichnet, dass** die Verschiebungsachse (AX6), die Zwischenachse (AX7), die Stützachse (AX3), die Umlenkachse (AX2), die Ausgangsachse (AX5), die Schwenkachse (AX8) und die Verbindungsachse (AX4) parallel zueinander verlaufen.

11. Kombinator nach Anspruch 6 und einem der Ansprüche 4 bis 5,
**dadurch gekennzeichnet, dass** das Verbindungssystem (20) eine Eingangswelle (38) aufweist, die mit der zweiten Bindung (21) versehen ist, dass die Zwischenwelle (31) das Organ mit variablem Arm bildet und eine Schiene (42) der Anschlussverbindung (34) umfasst, dass die Anschlussverbindung (34) eine Schwenkstange (36) umfasst, die in Bezug auf die Schiene (42) gleitbeweglich ist und mit der Zwischenwelle (38) verbunden ist, dass die Stützachse (AX3) die Verschiebungsachse (AX6) bildet, dass die Schwenkstange (36) sich entlang der Schwenkachse (AX8) erstreckt und fest mit einem Steuerstellglied (45) verbunden ist, und dass sich der Hebelarm (25) von der Schwenkachse (AX8) zur Stützachse (AX3) erstreckt.

12. Kombinator nach Anspruch 11,
**dadurch gekennzeichnet, dass** die Verbindungsachse (AX4) zwischen der Verschiebungsachse (AX6) und der Schwenkstange (36) angeordnet ist.

13. Kombinator nach einem der Ansprüche 11 bis 12,
**dadurch gekennzeichnet, dass** die Stützachse (AX3), die Umlenkachse (AX2), die Ausgangsachse (AX5), die Schwenkachse (AX8) und die Verbindungsachse (AX4) parallel zueinander sind.

14. Kombinator nach einem der Ansprüche 1 bis 13,
**dadurch gekennzeichnet, dass** das Verbindungssystem (20) mindestens ein Autopilot-Stellglied (75) umfasst.

15. Luftfahrzeug (50),
**dadurch gekennzeichnet, dass** das Luftfahrzeug mindestens einen Kombinator (1) nach einem der Ansprüche 1 bis 14 aufweist, wobei das erste Eingangsglied (51) und das zweite Eingangsglied (52) gelenkig mit dem Kombinator (1) verbunden sind.

16. Luftfahrzeug nach Anspruch 15,
**dadurch gekennzeichnet, dass** das Luftfahrzeug einen Propeller mit veränderlichem Anstellwinkel oder einen Rotor umfasst, der mit Blättern (55) mit veränderlichem Anstellwinkel versehen ist, die auf das Gieren des Luftfahrzeugs einwirken, dass das Luftfahrzeug eine Schubsteuerung (62) zum Ändern einer kollektiven Anstellwinkelkomponente des Anstellwinkels der Blätter (55) und eine Giersteuerung (61) zum Ändern einer differentiellen Anstellwinkelkomponente der Blätter (56) umfasst, dass das erste Eingangsglied (51) mit der Schubsteuerung (62) verbunden ist, das zweite Eingangsglied (52) mit der Giersteuerung (61) verbunden ist, und das Ausgangsglied (53) mit mindestens einem Anstellwinkelstellglied (56) verbunden ist, das den Anstellwinkel der Blätter (55) steuert.

17. Luftfahrzeug nach einem der Ansprüche 15 bis 16,
**dadurch gekennzeichnet, dass** das Luftfahrzeug eine Autoritätssteuerungsschnittstelle (63) umfasst, die mit einem Steuerstellglied (45) in Verbindung steht, das konfiguriert ist, um den Hebelarm (25) zu verändern.

## Claims

1. Combiner (1) for combining a first command order (O1) given by a first movement of a first input link (51) and a second command order (O2) given by a second movement of a second input link (52), said combiner (1) comprising an extended link (5) equipped with a first attachment (9) capable of being articulated to the first input link (51), the combiner (1) comprises a relay (10) articulated to the extended link (5), the relay (10) being mobile in rotation in relation to the extended link (5) about a relay axis (AX2), the relay (10) being equipped with an output attachment (11) capable of being articulated to an output link (53), the combiner (1) comprising a connection system (20) articulated to the relay (10), the connection system (20) comprising a second attachment (21) capable of being articulated to the second input link (52), **characterised in that** the connection system (20) comprises a variable armed member (35) producing a variable lever arm (25) as a function of a pilotable parameter of the combiner (1).

2. Combiner according to claim 1,
**characterised in that** said combiner (1) comprises a support (2), said extended link (5) being connected according to at least one degree of freedom in rotation to the support (2) in order to be mobile in rotation about a control axis (AX1) in relation to the support (2) during said first movement, the support (2) being fixed in a frame of reference (100) of the combiner (1), the control axis (AX1) being parallel to the relay axis (AX2).

3. Combiner according to any one of claims 1 to 2,
**characterised in that** said variable armed member (35) is mobile in relation to the extended link (5) and said parameter is a position of the extended link (5) in a frame of reference (100) of the combiner (1), or said parameter is a length of a control actuator (45) of the combiner (1) capable of moving a pivot axis (AX8) of the variable armed member (35).

4. Combiner according to any one of claims 1 to 3,
**characterised in that** said connection system (20) comprises a connector (30), said connector (30) comprising an intermediate shaft (31) connected by at least one degree of freedom in rotation about a support axis (AX3) to the extended link (5), the connector (30) comprising a linking rod (32) connected according to at least one degree of freedom in rotation about a connection axis (AX4) to the intermediate shaft (31) and connected by at least one degree of freedom in rotation about an output axis (AX5) to the relay (10).

5. Combiner according to claim 4,
**characterised in that** said support axis (AX3), said connection axis (AX4), said relay axis (AX2) and the output axis (AX5) form corners of a deformable parallelogram.

6. Combiner according to any one of claims 1 to 5,
**characterised in that** said connection system (20) comprises a connection link (33, 34) endowing the variable armed member (35) with a freedom of movement in rotation about a pivot axis (AX8), said variable armed member (35) being mobile in rotation about a movement axis (AX6), said variable armed member (35) being mobile in rotation about said pivot axis (AX8), said lever arm (25) extending between the pivot axis (AX8) and the movement axis (AX6).

7. Combiner according to claim 6,
**characterised in that** said connection link (33) comprises a pivoting rod (36) borne by the extended link (5) and attached to a guide (37), said pivoting rod (36) being integral to said guide (37) which is mobile in rotation about the pivot axis (AX8) in relation to the extended link (5) or said guide (37) being mobile in rotation about the pivot axis (AX8) in relation to said pivoting rod (36) which is integral to said extended link (5), said connection system (20) comprising an input shaft (38) forming said variable armed member (35) and sliding in relation to the guide (37), said input shaft (38) comprising the second attachment (21), said connection system (20) comprising a joining part (39) connected with at least one degree of freedom in rotation to the input shaft (38) about said movement axis (AX6).

8. Combiner according to claim 7 and any one of claims 4 to 5,
**characterised in that** said joining part (39) comprises an intermediate link (40) connected to the input shaft (38) with at least one degree of freedom in rotation about the movement axis (AX6) and to the intermediate shaft (31) about an intermediate axis (AX7).

9. Combiner according to claim 8,
**characterised in that** said connecting axis (AX4) is arranged between said intermediate axis (AX7) and said support axis (AX3) according to a geometric axis.

10. Combiner according to any one of claims 8 to 9,
**characterised in that** said movement axis (AX6), said intermediate axis (AX7), said support axis (AX3), said relay axis (AX2), said output axis (AX5), said pivot axis (AX8) and said connection axis (AX4) are parallel.

11. Combiner according to claim 6 and any one of claims 4 to 5,
**characterised in that** said connection system (20) comprises an input shaft (38) equipped with the second attachment (21), said intermediate shaft (31) forming said variable armed member and comprising a connection link (34) rail (42), the connection link (34) comprising a pivot rod (36) sliding in relation to the rail (42) and connected to the intermediate shaft (38), said support axis (AX3) forming said movement axis (AX6), said pivot rod (36) extending according to the pivot axis (AX8) and being integral to a control actuator (45), said lever arm (25) extending from the pivot axis (AX8) to the support axis (AX3).

12. Combiner according to claim 11,
**characterised in that** said connection axis (AX4) is arranged between said movement axis (AX6) and the pivot rod (36).

13. Combiner according to any one of claims 11 to 12,
**characterised in that** said support axis (AX3), said relay axis (AX2), said output axis (AX5), said pivot axis (AX8) and said connection axis (AX4) are parallel.

14. Combiner according to any one of claims 1 to 13,
**characterised in that** said connection system (20) comprises at least one automatic pilot actuator (75).

15. Aircraft (50),
**characterised in that** said aircraft comprises at least one combiner (1) according to any one of claims 1 to 14, said first input link (51) and said second input link (52) being articulated to the combiner (1).

16. Aircraft according to claim 15,
**characterised in that** said aircraft comprising a controllable pitch propeller or a rotor equipped with controllable pitch blades (55) acting on the yaw of the aircraft, said aircraft comprising a thrust control (62) to modify a component of the collective pitch of the pitch of said blades (55) and a yaw control (61) to modify a differential pitch component of said blades (56), said first input connection (51) is linked to the thrust control (62), said second input link (52) being linked to the yaw control (61), said output link (53) being linked to at least one pitch actuator (56) piloting the pitch of said blades (55).

17. Aircraft according to any one of claims 15 to 16,
**characterised in that** said aircraft comprises an authority control interface (63) in communication with a control actuator (45) configured to modify said lever arm (25).
